# EUROPÄISCHE PATENTSCHRIFT

(11) **EP 0 655 149 B1**
(45) Veröffentlichungstag und Bekanntmachung des Hinweises auf die Patenterteilung: **12.11.1997**
(21) Anmeldenummer: 94917546.7
(22) Anmeldetag: 13.06.1994
(51) Int. Cl.: G06F 1/18

(54) **MIKROCOMPUTER MIT EINEM RECHNERGEHÄUSE, EINEM STEUERGEHÄUSE, EINEM MONITOR UND EINER TASTASTUR**
MICROCOMPUTER WITH A COMPUTER CASE, A CONTROL CASE, A MONITOR AND A KEYBOARD
MICRO-ORDINATEUR COMPORTANT UN BOITIER D'ORDINATEUR, UN BOITIER DE COMMANDE, UN MONITEUR ET UN CLAVIER

(30) Priorität: 13.06.1993 DE 4319407
(43) Veröffentlichungstag der Anmeldung: 31.05.1995
(73) Patentinhaber: VOBIS MICROCOMPUTER AG, 52146 Würselen (DE)
(72) Erfinder: DAHMEN, Heinz-Willi, D-52062 Aachen (DE)
(74) Vertreter: Bauer, Wulf, Dr.
(86) Internationale Anmeldenummer: DE9400658
(87) Internationale Veröffentlichungsnummer: WO9429783

(56) Entgegenhaltungen:
- DE-A- 4 239 200
- DE-U- 9 204 824
- IBM TECHNICAL DISCLOSURE BULLETIN., Bd.36, Nr.9A, September 1993, NEW YORK US Seiten 525 - 530, XP396154 'Multimedia System Packaging'
- BYTE, Dezember 1992, US Seite 72 'DESKTOP MULTIMEDIA'

## Beschreibung

Die Erfindung bezieht sich auf einen Mikrocomputer nach dem Oberbegriff des Patentanspruchs 1.

Bei Mikrocomputern gibt es derzeit im wesentlichen zwei unterschiedliche Arten von Rechnergehäusen, nämlich Tischgehäuse und Standgehäuse. Die Tischgehäuse haben den Vorteil, daß die Diskettenlaufwerke einfach zugänglich sind, sie haben aber den Nachteil, daß das Tischgehäuse relativ viel Platz auf der Arbeitsfläche eines Tisches wegnimmt. Diesen Nachteil vermeiden zwar die Standgehäuse, sie haben aber wiederum den Nachteil, daß die Schlitze für die Diskettenlaufwerke schwer zugänglich sind, gleiches gilt für sonstige Bedienelemente des Rechnergehäuses.

Im Rechnergehäuse eines Mikrocomputers der eingangs genannten Art sind die für die Datenverarbeitung wesentlichen Bestandteile eines Mikrocomputers untergebracht, insbesondere die Hauptplatine (Motherboard), Netzteil, mindestens ein Laufwerk für auswechselbare Datenträger, zumeist eine Festplatte, die zugehörigen Kontroller und Karten, wie beispielsweise Graphikkarten, die an den vorgesehenen Steckpiätzen der Hauptplatine angeordnet sind. Darüber hinaus sind im Rechnergehäuse Anzeigeleuchten vorgesehen, die den Einschaltzustand, die Funktion eines oder mehrerer Laufwerke signalisieren. Schließlich sind teilweise auch Rückstelltaster vorgesehen, um einen Warmstart in einfacher Weise durchführen zu können.

Aus BYTE, Dezember 1992, US, Seite 72 "Desktop Multimedia" ist ein Mikrocomputer bekannt, der ein Desktop-Gehäuse hat, in dem sich sowohl die entscheidenden Bedienelemente als auch diejenigen Teile befinden, die keinen separaten Zugang von außen benötigen. Oberhalb des Steuergehäuses befindet sich ein zusätzliches Gehäuse für die Aufnahme von Bauelementen für die Funktion Multimedia, dort sind insbesondere zwei Lautsprecher und weitere einzelne Bauteile untergebracht.

Die Erfindung hat sich die Aufgabe gestellt, einen Mikrocomputer der eingangs genannten Art so weiter zu bilden, daß die Bedienelemente des Rechnergehäuses günstig und benutzerfreundlich zu erreichen sind, wie dies bei einem Tischgehäuse im allgemeinen der Fall ist, ohne daß jedoch die Nachteile des Tischgehäuses in Kauf genommen werden müssen, also ohne den Platzbedarf eines Tischgehäuses. Die Erfindung verfolgt also die Idee, die Vorteile eines Tischgehäuses mit denen eines Standgehäuses zu kombinieren, ohne die Nachteile in Kauf nehmen zu müssen.

Diese Aufgabe wird gelöst durch den Mikrocomputer mit den Merkmalen des Patentanspruchs 1.

In dem Steuergehäuse, das im Vergleich zu einem Rechnerstandgehäuse, im folgenden auch einfach Rechnergehäuse genannt, wesentlich kleiner ist, sind die entscheidenden Bedienelemente aus dem Rechnergehäuse ausgruppiert und untergebracht. Im Rechnergehäuse verbleiben nur noch diejenigen Teile, die keinen separaten Zugang von außen benötigen, also Hauptplatine mit ihren eingesteckten Karten, Netzteil, Festplatte usw. Die Laufwerke, in die eine Diskette bzw. ein auswechselbarer Datenträger eingelegt werden kann, sind im Steuergehäuse untergebracht. Sie nehmen dort den größten Raum ein. Ansonsten befinden sich im Steuergehäuse noch die Anschlüsse für die Tastatur, für eine Maus und für ein Mikrophon. Der Mikrocomputer wird über den Netzschalter, der ebenfalls im Steuergehäuse ausgebildet ist, ein- und ausgeschaltet. Auf diese Weise muß ein Benutzer bei normalem Betrieb eines Mikrocomputers nicht auf das Rechnergehäuse zurückgreifen, er muß dort keine Manipulationen durchführen. Alle Bedienvorgänge erfolgen am Steuergehäuse. Dieses ist so klein, daß es unter den Fuß eines handelsüblichen Monitors paßt. Da es auch gewichtsmäßig wesentlich leichter als das Rechnergehäuse ist, kann es von handelsüblichen Monitorschwenkstütze getragen werden. Es bildet die Unterlage für den Monitor, der auf seine Oberseite aufgesetzt wird.

In einer besonders bevorzugten Weiterbildung ist das Steuergehäuse als Monitorfup ausgebildet, hat also an seiner Oberfseite alle für eine verstellbare und verschwenkbare Aufnahme eines Monitors notwendigen Vorrichtungen, vorzugsweise ist seine Oberseite ein Monitorfußteil.

Da die Größe des Steuergehäuses im wesentlichen durch die Anzahl der Laufwerke bestimmt ist, die im Steuergehäuse untergebracht werden sollen, und da das Steuergehäuse möglichst klein sein soll, wird eine maximale Größe angestrebt, die für die Aufnahme von vier Laufwerken ausreicht. Für die Größe wird dabei immer Bezug genommen auf ein Laufwerk 5 1/4 Zoll. Vorzugsweise hat das Steuergehäuse also maximal vier Laufwerke. Sie sind im praktischen Einsatz ausgebildet als CD-Rom-Laufwerk, 3,5 Zoll und 5 1/4 Zoll Laufwerk.

In vorzugsweiser Weiterbildung ist das Steuergehäuse über ein einziges Mehrfachkabel mit dem Rechnergehäuse verbunden. Hierdurch vereinfacht sich der Aufbau des Mikrocomputers. Im Mehrfachkabel sind die Anschlüsse zu den einzelnen Laufwerken untergebracht, weiterhin sind vorgesehen eine Netzschaltleitung, die vorzugsweise als Niedervoltleitung ausgeführt ist und über die ein Relais betätigt wird, das im Rechnergehäuse die Netzspannung schaltet; die Verbindungsleitung zur Tastatur;die Verbindungsleitungen zum internen oder externen Lautsprecher, eventuell zu einem Mikrophon und auch für einzelne Anzeigeleuchten, die vorzugsweise im Steuergehäuse angeordnet sind und den Einschaltzustand, den Betrieb der Festplatte usw. anzeigen.

In einer besonders bevorzugten Ausbildung hat das Steuergehäuse Füße, die als L-förmige oder als U-förmige Bügel ausgeführt sind. Diese Bügel sind nach vorne hin offen und so hoch, daß eine Tastatur zwischen die Bügel und die Unterseite des Steuergehäuses eingeschoben werden kann. Die Tastatur ist zwar wesentlich breiter als das Steuergehäuse, auf diese Weise hat man aber einen Platz für die Tastatur unterhalb des Steuergehäuses in den Fällen, in denen der Mikrocomputer nicht benutzt wird, z.B. auf einer Monitorschwenkstütze.

Das erfindungsgemäße Steuergehäuse ist ein zusätzlicher Teil des Mikrocomputers. Preislich wird der gesamte Mikrocomputer durch das Zusatzteil jedoch nicht erheblich verteuert, weil sich im Steuergehäuse im wesentlichen Teile befinden, die sonst im Rechnergehäuse untergebracht sind, insbesondere die Laufwerke. Insofern kann die Erfindung auch so verstanden und erläutert werden, daß das Rechnergehäuse bei einem Mikrocomputer nach dem Stand der Technik nun aufgeteilt wird in zwei separate Gehäuse, nämlich das Rest-Rechnergehäuse und ein Steuergehäuse. Insoweit sind die zusätzlichen Kosten, die durch diese Aufteilung entstehen, im wesentlichen die Kosten für das Gehäuse des Steuergehäuses, die zusätzlichen Montagearbeiten und die zusätzlichen Kabelverbindungen.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In der Zeichnung zeigen:
- Fig. 1: eine Frontansicht eines Mikrocomputers mit einem erfindungsgemäßen Steuergehäuse und
- Fig. 2: eine Seitenansicht von Monitor, Steuergehäuse und Tastatur eines Mikrocomputers gem. Fig. 1.

Wie aus den Figuren ersichtlich ist, hat der Mikrocomputer ein zusätzliches Teil, nämlich ein Steuergehäuse 20. Er setzt sich darüber hinaus aus den an sich bekannten Komponenten Rechnergehäuse 22, Tastatur 24 und Monitor 26 zusammen. Weitere Bausteine, wie zum Beispiel ein Drucker, eine Maus oder dergleichen sind nicht dargestellt, sie können aber in an sich bekannter Weise zugefügt werden.

Das Steuergehäuse 20 ist im Vergleich zu dem Rechnergehäuse 22 relativ klein, die maximale Größe des Steuergehäuses 20 soll dadurch bestimmt sein, daß höchstens vier Standard-Laufwerke im Steuergehäuse 20 untergebracht werden können. Ein 5 1/4 Zoll-Laufwerk hat die Außenabmessungen 15 x 4,5 x 21 cm (zirka-Maße), die Maße des Steuergehäuses sollen das Vierfache sein, also etwa 30 x 9 x 21 cm betragen. Das Steuergehäuse 20 hat kein separates Netzteil, die Spannungsversorgung erfolgt über das Rechnergehäuse 22, in dem sich ein Netzteil befindet.

Auf der Frontplatte des Steuergehäuses 20 sind die Laufwerke 28, 30 zugänglich, im gezeigten Ausführungsbeispiel sind zwei Laufwerke vorgesehen. Weiterhin befindet sich auf der Frontplatte ein Ein- und Ausschalter für die Netzspannung 32, der hier als Taster ausgebildet ist. Er steuert ein Relais, das im Rechnergehäuse 22 vorgesehen ist. Dadurch wird vermieden, daß in einer Verbindungsleitung 34 zwischen dem Rechnergehäuse 22 und dem Steuergehäuse 20 die volle Netzspannung geführt werden muß. Weiterhin sind an der Frontplatte des Steuergehäuses 20 eine Steckbuchse 36 für ein Mikrophon und eine Steckbuchse 38 für einen Kopfhörer bzw. einen Zusatzlautsprecher vorgesehen. In der Frontplatte sind weiterhin Auslässe 40, 42 für Leuchtanzeigen vorgesehen, im konkret gezeigten Fall eine Leuchtanzeige für den Einschaltzustand des Rechners und eine Leuchtanzeige, die bei Betrieb der Festplatte, welche nach wie vor im Rechnergehäuse 22 untergebracht ist, aufleuchtet.

Auf der Frontplatte kann noch ein Reset-Schalter 43 vorgesehen sein, mit dem ein Warmstart, wie er auch über die Tastatur 24 möglich ist, erfolgen kann.

Auf der Rückseite des Steuergehäuses ist ein Vielfachstecker für die Verbindungsleitung 34 vorgesehen, die der Verbindung mit dem Rechnergehäuse 22 dient. In der hier gezeigten, vorzugsweisen Ausführung, ist nur eine Verbindungsleitung 34 vorgesehen, sie hat eine Vielzahl von einzelnen Leitern, entsprechende Kontaktzahl hat der Vielfachsteckkontakt. Weiter befindet sich auf der Rückseite des Steuergehäuses 20 der Steckanschluß für die Tastatur 24 und ein Anschluß für eine Maus, die gegebenenfalls aber auch als Funkmaus ausgebildet sein kann.

Das Steuergehäuse 20 hat ein stabiles Gehäuse, das so ausgeführt ist, daß es das Gewicht eines normalen Monitors 26 tragen kann. Vorzugsweise ist das Gehäuse aus Kunststoff oder aus Stahlblech hergestellt.

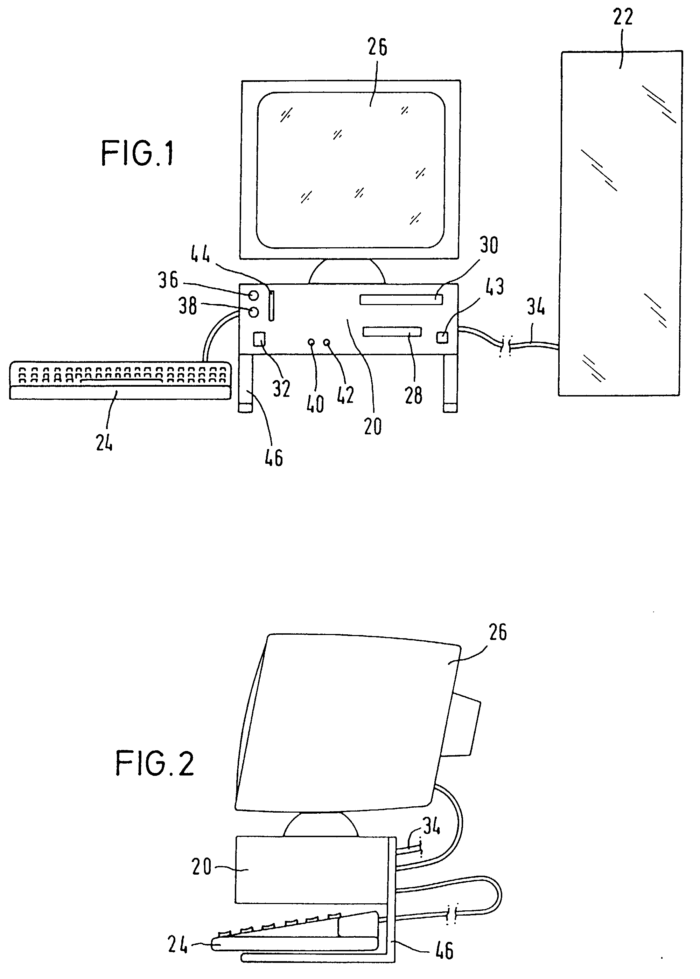

In einer besonders vorteilhaften, in Fig. 1 angedeuteten Weiterbildung ist im Steuergehäuse 20 ein Lesegerät 44 angeordnet, das über einen Schlitz in der Frontplatte zugänglich ist. Durch diesen Schlitz kann eine Karte für Zugangssicherung, insbesondere im Format einer Scheckkarte, eingeführt werden. Der Rechner startet nur, wenn diese Zugangssicherung erfolgt, in vorteilhafter Weise kann sogar der Netzschalter im Lesegerät 44 zugeordnet sein. Der Netzschalter wird dann dadurch betätigt, daß die Karte für die Zugangssicherung in den Lesebereich des Lesegerätes 44 eingeführt wird. Als Karte für Zugangssicherung kommen insbesondere Magnetstreifenkarten und vorzugsweise IC-Karten in Betracht.

Wie insbesondere Fig. 2 zeigt, befinden sich unterhalb des Steuergehäuses 20 zwei bügelförmige Füße 46 mit L-Form, die an beiden Seitenenbereichen des Steuergehäuses 20 lösbar befestigt sind. Sie sind aus einem stabilen Material, zum Beispiel einem Metallrohr mit rundem oder rechteckigem Querschnitt gefertigt und nach vorn, also zur Frontseite des Steuergehäuses 20 hin, offen. Ein vertikaler L-Schenkel ist an der Rückseite mit dem Steuergehäuse 20 lösbar verbunden. Der lichte Abstand eines horizontalen L-Schenkels von der Unterseite des Steuergehäuses 20 ist so groß gewählt, daß eine normale Tastatur auf die Schenkel geschoben werden kann und zwischen diese und die Unterseite des Steuergehäuses 20 paßt, wie dies Fig. 2 zeigt.

In einer geänderten Ausführung sind die Füße 46 U-förmig, wobei sie zwei horizontale und einen vertikalen Schenkel ausbilden. Der horizontale Schenkel ist an der Unterseite mit dem Steuergehäuse 20 lösbar verbunden.

Insgesamt erreicht man dabei dieselbe Konfiguration wie in Fig. 2, also wiederum kann eine Tastatur 24 zwischen dem Unterboden des Steuergehäuses 20 und den unteren horizontalen Schenkeln der Füße 46 untergebracht werden.

Im Steuergehäuse 20 ist ein Lautsprecher angeordnet, wie er nach dem Stand der Technik im Rechnergehäuse untergebracht ist. Es ist möglich, zusätzliche Lautsprecher, insbesondere auch Stereo-Lautsprecher, am Steuergehäuse 20 anzuschließen, hierfür ist die bereits erwähnte Steckbuchse 38 vorgesehen.

Das Steuergehäuse 20 ist wesentlich leichter als das Rechnergehäuse 22. Das typische Gewicht eines Steuergehäuses liegt bei ca. 1,5 kg.

## Patentansprüche

1. Mikrocomputer mit einem Rechnerstandgehäuse (22), in dem sich eine Hauptplatine des Mikrocomputers befindet, mit einem Monitor (26) und mit einer Tastatur (24), die untereinander verbunden sind und mindestens einen Netzanschluß aufweisen, sowie einem Netzschalter (32), dadurch gekennzeichnet, daß der Mikrocomputer zusätzlich ein Steuergehäuse (20) aufweist, das im Vergleich zum Rechnerstandgehäuse wesentlich kleiner ist und in dem die entscheidenden Bedienelemente, nämlich der Netzschalter (32) des Mikrocomputers und Laufwerke, in die ein auswechselbarer Datenträger eingelegt werden kann, aus dem Rechnerstandgehäuse ausgruppiert und im Steuergehäuse (20) untergebracht sind, und daß im Rechnerstandgehäuse diejenigen Teile verbleiben, die keinen separaten Zugang von außen benötigen, also Hauptplatine mit ihren eingesteckten Karten, Netzteil, Festplatte.

2. Mikrocomputer nach Anspruch 1, dadurch gekennzeichnet, daß in dem Steuergehäuse (20) maximal vier Laufwerke (28, 30) untergebracht sind.

3. Mikrocomputer nach Anspruch 1, dadurch gekennzeichnet, daß die Höhe des Steuergehäuses (20) maximal das 2,5-fache der Höhe und die Breite des Steuergehäuses (20) maximal das 3-fache der entsprechenden Abmessung eines 5 1/4-Zoll-Laufwerkes sind.

4. Mikrocomputer nach Anspruch 1, dadurch gekennzeichnet, daß das Steuergehäuse (20) über ein einziges Mehrfachkabel (34) mit dem Rechnergehäuse (22) verbunden ist.

5. Mikrocomputer nach Anspruch 1, dadurch gekennzeichnet, daß das Steuergehäuse (20) einen Anschluß (38) für einen Kopfhörer aufweist.

6. Mikrocomputer nach Anspruch 1, dadurch gekennzeichnet, daß im Steuergehäuse (20) maximal vier Laufwerke (28, 30) mit auswechselbarem Datenträger angeordnet sind.

7. Mikrocomputer nach Anspruch 1, dadurch gekennzeichnet, daß das Steuergehäuse (20) an seiner Unterseite Füße (46) aufweist, die aus gebogenen, zur Frontseite des Steuergehäuses (20) hin offenen Bügeln hergestellt sind und daß die Maße so gewählt sind, daß eine Tastatur (24) zwischen diese Füße (46) und die Unterseite des Steuergehäuses (20) einschiebbar ist.

8. Mikrocomputer nach Anspruch 1, dadurch gekennzeichnet, daß im Steuergehäuse (20) ein Steckanschluß für die Tastatur (24), ein Anschluß für eine Mouse und ein Anschluß (36) für ein Mikrophon vorgesehen sind.

9. Mikrocomputer nach Anspruch 1, dadurch gekennzeichnet, daß im Steuergehäuse (20) ein Lautsprecher angeordnet ist.

## Claims

1. Microcomputer with a computer tower casing (22) housing a mainboard of the microcomputer, with a monitor (26) and with a keyboard (24), which are interlinked and are equipped with at least one power supply and a mains switch (32), **characterized in that** an additional control unit (20) of the microcomputer is provided which is substantially smaller than the computer tower casing and into which the decisive control elements, namely the mains switch (32) of the microcomputer and the drives, into which interchangeable data carriers can be inserted, are transferred, so that these control elements are housed in the control unit (20), and in that those parts remain in the computer tower casing, which do not need a separate access from outside, so the mainboard with inserted plug-in cards, power supply, hard disk.

2. Microcomputer according to claim 1, characterized in that the control unit (20) houses a maximum of four drives (28, 30).

3. Microcomputer according to claim 1, characterized in that the height of the control unit (20) is a maximum of 2,5 times the height, and the with of the control unit (20) is a maximum of three time the with of the corresponding dimensions of a standard 5 1/4 inch drive.

4. Microcomputer according to claim 1, characterized in that the control unit (20) is interconnected via a single multiple cable (34) with the computer casing (22).

5. Microcomputer according to claim 1, characterized in that the control unit (20) comprises a connector (38) for a headphone.

6. Microcomputer according to claim 1, characterized in that the control case (20) houses a maximum of four drives (28, 30) with interchangeable data carriers.

7. Microcomputer according to claim 1, characterized in that the control unit (20) has feet (46) at its bottom face which are made of bended bows open toward the front face of the control unit (20), the dimensions being chosen so that a keyboard (24) may be parked between these feet (46) and the lower face of the control unit (20).

8. Microcomputer according to claim 1, characterized in that a plug connector (20) for the keyboard (24), a connector for a mouse and a connector (36) for a microphone are provided in the control unit (20).

9. Microcomputer according to claim 1, characterized in that a loudspeaker is arranged in the control unit (20).

## Revendications

1. Micro-ordinateur avec un boîtier debout (22) de l'ordinateur, dans lequel se trouve une carte principale à circuits imprimés de l'ordinateur, avec un moniteur (26) et avec un clavier (24) qui sont interconnectés et présentent du moins une alimentation sur le secteur, ainsi qu'avec un commutateur principal (32), caractérisé par le fait que le micro-ordinateur présente en sus un boîtier de commande (20) qui, en comparaison du boîtier debout de l'ordinateur, est considérablement plus petit et dans lequel sont logés - transférés du boîtier debout de l'ordinateur - les éléments décisifs de commande, à savoir le commutateur principal (32) du micro-ordinateur et les lecteurs dans lesquels un support de données échangeable peut être inséré, et par le fait que dans le boîtier debout de l'ordinateur ne restent que les éléments qui ne nécessitent pas d'accès séparé de dehors, donc la carte principale à circuit imprimés avec ses cartes embrochées, l'alimentation électrique, le disque dur.

2. Micro-ordinateur selon la revendication 1, caractérisé par le fait que quatre lecteurs (28, 30) au maximum sont logés dans le boîtier de commande (20).

3. Micro-ordinateur selon la revendication 1, caractérisé par le fait que la hauteur du boîtier de commande (20) est 2,5 fois au maximum la hauteur, et la largeur du boîtier de commande (20) est 3 fois au maximum la dimension correspondante d'un lecteur de 5 1/4 pouces.

4. Micro-ordinateur selon la revendication 1, caractérisé par le fait que le boîtier de commande (20) est connecté au boîtier d'ordinateur (22) par le biais d'un seul câble multiple (34).

5. Micro-ordinateur selon la revendication 1, caractérisé par le fait que le boîtier de commande (20) présente une prise (38) pour un écouteur.

6. Micro-ordinateur selon la revendication 1, caractérisé par le fait que quatre lecteurs (28, 30) au maximum avec support de données échangeable sont disposés dans le boîtier de commande (20).

7. Micro-ordinateur selon la revendication 1, caractérisé par le fait que des pieds (46) sont disposés sur la face inférieure du boîtier de commande (20), ceux-ci sont fabriqués de pièces recourbées en arc et ouvertes vers la face frontale du boîtier de commande (20), et que les dimensions sont choisies de telle manière qu'un clavier (24) puisse être introduit en glissant entre ces pieds (46) et la face inférieure du boîtier de commande (20).

8. Micro-ordinateur selon la revendication 1, caractérisé par le fait que l'on prévoit dans le boîtier de commande (20) une connexion à fiches pour le clavier (24), une connexion pour une souris ainsi qu'une prise (36) pour un microphone.

9. Micro-ordinateur selon la revendication 1, caractérisé par le fait qu'un haut-parleur est disposé dans le boîtier de commande (20).
